Europäisches Patentamt

European Patent Office

Office européen des brevets

(19)

(11) Veröffentlichungsnummer: **0 279 914**
**A2**

## (12) EUROPÄISCHE PATENTANMELDUNG

(21) Anmeldenummer: 87116633.6

(22) Anmeldetag: 11.11.87

(51) Int. Cl.⁴: **H04B 1/08** , H04R 25/02

(30) Priorität: **27.02.87 DE 3706366**

(43) Veröffentlichungstag der Anmeldung:
**31.08.88 Patentblatt 88/35**

(84) Benannte Vertragsstaaten:
**AT CH DE ES GB LI NL**

(71) Anmelder: **ROBERT BOSCH GMBH**
**Postfach 50**
**D-7000 Stuttgart 1(DE)**

(72) Erfinder: **Köpke, Wolfgang, Dipl-Ing.**
**Prinzregentenstrasse 7**
**D-1000 Berlin 31(DE)**
Erfinder: **Müller, Manfred**
**Säntisstrasse 142 a**
**D-1000 Berlin 48(DE)**

(74) Vertreter: **Schmidt, Hans-Ekhardt**
**Robert Bosch GmbH Geschäftsbereich**
**Elektronik Patent- und Lizenzabteilung**
**Forckenbeckstrasse 9-13**
**D-1000 Berlin 33(DE)**

(54) **Empfangsvorrichtung.**

(57) Um dem Benutzer eines normalen Hörgerätes (12) die Möglichkeit zu geben, nicht nur mit dem Hörgerätemikrofon aufgenommene Tonsignale zu hören, sondern wahlweise auch drahtlos übertragene Tonsignale, wird mit dem Hörgerät eine als Baueinheit ausgebildete Empfangsvorrichtung (10) lösbar verbunden. Die Empfangsvorrichtung ist vorzugsweise in einem Hörgerätegehäuse (13) untergebracht und über ein Kabel (11) mit dem Hörgerät (12) verbunden ist. Die lösbare Verbindung erfolgt vorzugsweise durch einen an dem hörgeräteseitigen Kabelende vorgesehenen Aufsteckadapter (22), der auf das Hörgerät aufgesteckt werden kann und dessen Gegenkontakte (23) bei aufgestecktem Adapter mit Kontakten (24) des Hörgerätes verbunden sind. Die Kontakte (24) sind innerhalb des Hörgerätes mit dem Eingang des Hörgeräteverstärkers (25) verbunden.

Fig. 1

## Empfangsvorrichtung

Die Erfindung betrifft eine Empfangsvorrichtung nach dem Oberbegriff des Anspruchs 1.

Es sind Empfangsvorrichtungen für drahtlos übertragene Signale bekannt (W. Güttner, Hörgerätetechnik, 1978, Georg Thieme Verlag, Stuttgart, Seiten 134 ... 138), bei denen ein mit dem Nutzsignal frequenzmodulierter Hochfrequenzträger oder Infrarotträger als Übertragungsmedium verwendet wird. Die Empfangsvorrichtung ist vorzugsweise in ein auf der Brust getragenes Taschengerät eingebaut, an das ein an einer Otoplastik befestigter Ohrhörer oder ein Kopfhörer angeschlossen ist. Diese Empfangsvorrichtungen sind Spezialgeräte, die ausschließlich für den Unterricht Hörbehinderter eingesetzt werden.

### Aufgabe

Der Erfindung liegt die Aufgabe zugrunde, einem Hörbehinderten den Empfang von Hörschall mittels des ihm vertrauten Hörgerätes und wahlweise auch den Empfang von drahtlos übertragenen Informationen mittels des gleichen Gerätes zu ermöglichen, wobei der dafür erforderliche technische Aufwand möglichst gering gehalten, die Bedienbarkeit des Hörgerätes nicht erschwert und der Tragekomfort nicht verschlechtert werden soll.

### Lösung

Diese Aufgabe wird bei einer gattungsgemäßen Empfangsvorrichtung durch die kennzeichnenden Merkmale des Hauptanspruchs gelöst.

### Erzielbare Vorteile

Die mit der Erfindung erzielten Vorteile bestehen insbesondere darin, daß ein handelsübliches Hörgerät wahlweise mit einer Empfangsvorrichtung für drahtlos übertragene Informationen nachgerüstet werden kann. Der Hörgerätebenutzer ist dann nicht nur in der Lage, den mit dem Mikrofon seines Hörgerätes empfangenen Schall zu hören, sondern gewünschtenfalls auch zusätzliche Informationen, die drahtlos empfangen werden. Wünscht er die Wiedergabe der zuletzt genannten Informationen, so braucht er lediglich eine erfindungsgemäße Empfangsvorrichtung mit seinem Hörgerät zu verbinden. Ein weiterer Vorteil läßt sich erzielen, wenn gemäß einem Ausführungsbeispiel der Erfindung die Empfangsvorrichtung in einem Gehäuse eines handelsüblichen Hörgerätes untergebracht ist, so daß derselbe Gehäusetyp für das Hörgerät und die Empfangsvorrichtung verwendbar ist.

### Beschreibung von Ausführungsbeispielen

Ausführungsbeispiele der Erfingung sind in der Zeichnung dargestellt und werden an Hand mehrerer Figuren näher beschrieben. Es zeigen

Fig. 1 eine Ansicht einer Empfangsvorrichtung mit einem Gehäuse eines hinter dem Ohr zu tragenden Hörgerätes, wobei das Gehäuse über ein Kabel mit einem Hörgerät verbunden ist,

Fig. 2 eine Ansicht einer zweiten Ausführungsform einer Empfangsvorrichtung mit einem Gehäuse eines Taschen-Hörgerätes,

Fig. 3 eine Ansicht einer dritten Ausführungsform einer Empfangsvorrichtung mit einem Gehäuse eines in dem Ohr zu tragenden Hörgerätes,

Fig. 4 eine Ansicht einer Empfangsvorrichtung, die aus einem Aufsteckadapter besteht, und

Fig. 5 ein Blockschaltbild einer Sende-bzw. Sende-Empfangsstation.

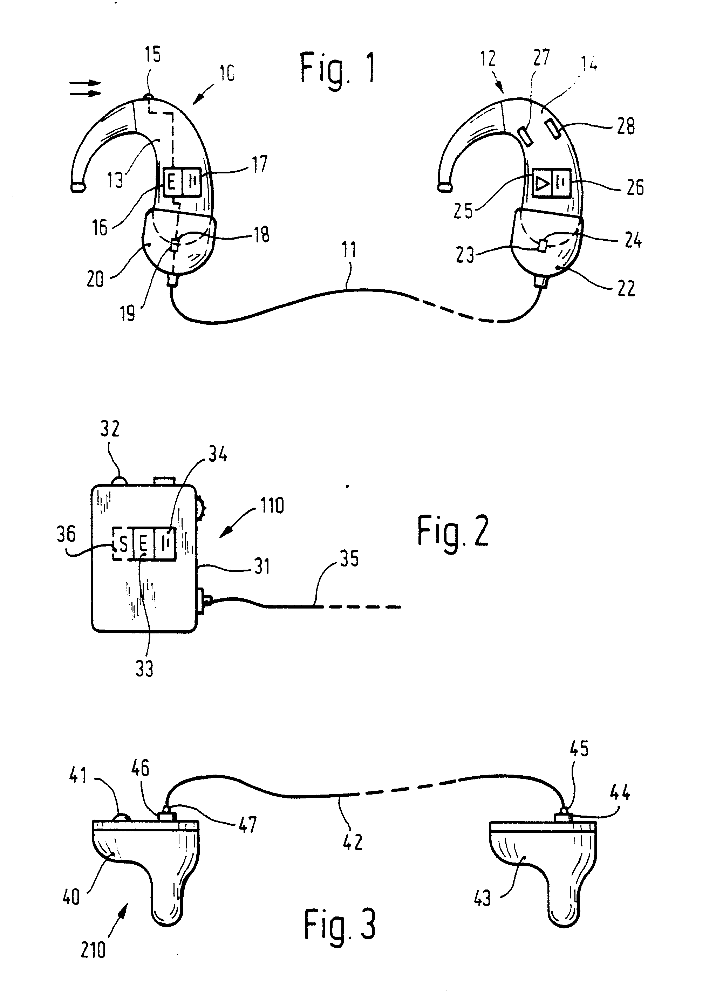

In Fig. 1 ist eine Empfangsvorrichtung 10 gezeigt, die über ein Kabel 11 lösbar mit einem normalen Hörgerät 12 verbunden ist. Das Hörgerät 12 ist ein hinter dem Ohr zu tragendes Gerät, und die Empfangsvorrichtung 10 hat vorzugsweise ein Gehäuse 13 vom selben Typ wie das Gehäuse 14 des Hörgerätes 12.

Die Empfangsvorrichtung 10 enthält ein Empfangselement 15, das ist bei einer Infrarotübertragung eine Fotodiode, die zu einer Empfangsschaltung 16 gehört. Die Empfangsschaltung wird aus einem Akkumulator 17 gespeist. Der Ausgang der Empfangsschaltung 16 ist über gehäusefeste Kontakte 18 mit entsprechenden Gegenkontakten 19 eines ersten Aufsteckadapters 20 verbunden. Die Gegenkontakte 19 stehen mit einem Ende des Kabels 11 in Verbindung, dessen anderes Ende mit einem zweiten Aufsteckadapter 22 bzw. mit Gegenkontakten 23 dieses Aufsteckadapters verbunden sind. Den Gegenkontakten 23 des zweiten Aufsteckadapters 22 stehen hörgeräteseitig Kontakte 24 gegenüber. Sind die beiden Aufsteckadapter 20, 22 auf die Gehäuse 13, 14 aufgesteckt, so bilden die Steckverbinder eine leitende Verbindung. Die Kontakte 24 des Hörgerätes 12 sind mit dem Eingang des in diesem Hörgerät enthaltenen Hörgeräteverstärkers 25 verbunden. Das Hörgerät 14 weist einen Akkumulator 26 zur Stromversorgung und einen Hörer 27 sowie ein Mikrofon 28 auf.

Die Wirkungsweise der vorstehend beschriebenen Empfangsvorrichtung ist folgende.

Nur wenn es der Benutzer wünscht, ergänzt er sein Hörgerät 14 durch eine Empfangsvorrichtung 10 für drahtlos übertragene Informationen. Zu diesem Zweck steckt er den zweiten Aufsteckadapter 22 auf sein Hörgerät 14 und den ersten Aufsteckadapter 20 auf die Empfangsvorrichtung 10. Das Hörgerät 14 trägt der Benutzer auf einem Ohr und die Empfangsvorrichtung 10 auf dem anderen Ohr.

Nun kann der Benutzer zum Beispiel ein moduliertes Infrarotsignal mittels der Fotodiode 15 der Empfangsvorrichtung 10 empfangen. Das Signal wird in der Empfangsschaltung 16 verstärkt und demoduliert und als NF-Signal über das Kabel 11 an das Hörgerät 12 übertragen, in welchem die NF-Signale verstärkt, der Hörbehinderung entsprechend bearbeitet und über den Hörer 27 wiedergegeben werden. Das Empfangselement 15 ist bei der in dem vorliegen den Ausführungsbeispiel vorausgesetzten Infrarot-Übertragung eine Fotodiode, bei einer Ultraschall-Übertragung ein Ultraschallempfänger und bei einer HF-Übertragung eine Empfangsantenne. Dementsprechend sind die Empfangsschaltungen 16 eine Infrarot-, Ultraschall-bzw. eine Hochfrequenz-Empfangsschaltung.

Nach Fig. 2 ist eine Empfangsvorrichtung 110 in einem Taschenhörgerätegehäuse 31 untergebracht. Das Gehäuse weist an seiner oberen Stirnseite ein Empfangselement 32 auf, das ist vorzugsweise eine Fotodiode. In seinem Innern enthält das Gehäuse eine Empfangsschaltung 33 und einen Akkumulator 34. Mit dem Gehäuse 31 bzw. dem Ausgang der Empfangsschaltung 33 ist fest oder steckbar ein Kabel 35 verbunden, das zum Beispiel, wie in Fig. 1 gezeigt, an seinem anderen Ende einen Aufsteckadapter oder einen anderen Steckverbinder trägt, der die elektrische Verbindung zu einem Hörgerät, zum Beispiel einem hinter dem Ohr zu tragenden Hörgerät, herstellt.

Nach Fig. 3 ist eine Empfangsvorrichtung 210 in einem Gehäuse 40 eines in dem Ohr zu tragenden Hörgerätes untergebracht, das mit einem Empfangselement 41 versehen ist. Die Empfangsvorrichtung enthälf wie in den Ausführungsbeispielen nach Fig. 1 und 2 eine Empfangsschaltung und eine Stromquelle in Form eines Akkumulators. Die Empfangsvorrichtung 210 steht über ein Kabel 42 mit einem normalen in dem Ohr zu tragenden Hörgerät 43 in Verbindung. Das in dem Ohr zu tragende Hörgerät ist an seiner Stirnseite mit einem Steckanschluß 44 versehen, in den ein Stecker 45 des Kabels 42 paßt. In analoger Weise befindet sich an der Stirnseite des Gehäuses 40 der Empfangsvorrichtung 41 ein Steckanschluß 46, in den ein am anderen Ende des Kabels 42 vorgesehener Stecker 47 paßt.

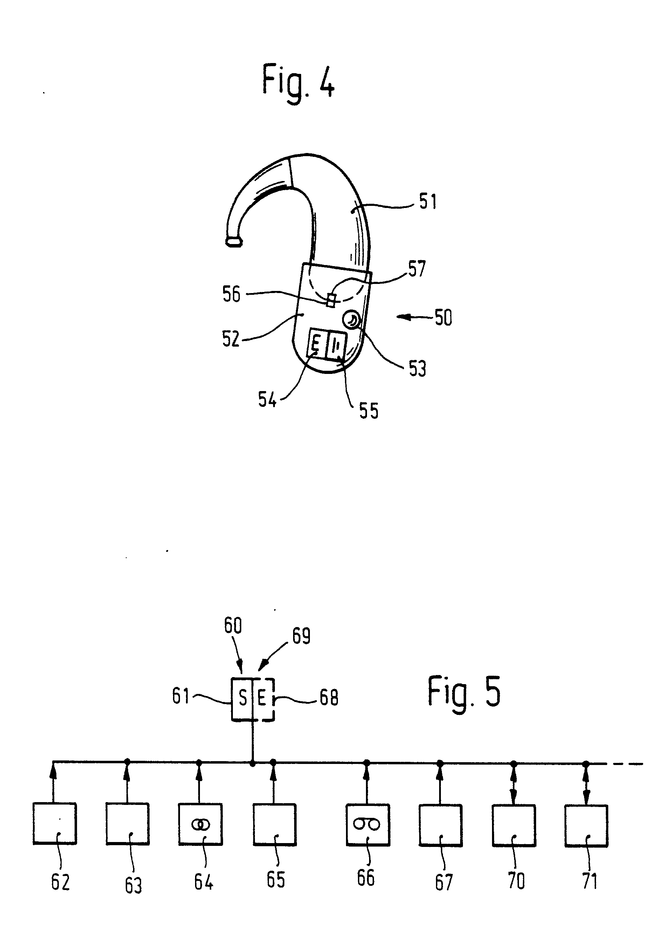

In Fig. 4 ist eine Empfangsvorrichtung 50 gezeigt, die aus einem auf ein normales hinter dem Ohr zu tragendes Hörgerät 51 steckbaren Aufsteckadapter 52 besteht. Der Aufsteckadapter enthält alle zum drahtlosen Empfang benötigten Baueinheiten, wie zum Beispiel ein Empfangselement 53, eine Empfangsschaltung 54, eine Stromquelle 55 und elektrische Kontakte 56, die mit entsprechenden Gegenkontakten 57 des Hörgerätes 51 korrespondieren. Die Kontakte 56 und Gegenkontakte 57 stellen bei auf das Hörgerät 51 aufgestecktem Aufsteckadapter 52 eine elektrische Verbindung zwischen der Empfangsschaltung 54 und dem Hörgeräteverstärker des Hörgerätes 51 her. Bei der Ausführungsform einer Empfangsvorrichtung nach Fig. 4 wird somit kein Hörgerätegehäuse für die Bauelemente und Baueinheiten der Empfangsvorrichtung benötigt.

In Fig. 5 ist eine mit 60 bezeichnete, zu den Empfangsvorrichtungen nach den Fig. 1 bis 4 gehörende Sendestation gezeigt. Zu der Sendestation gehört ein Sender 61, das ist je nach der Art der drahtlosen Übertragung ein Infrarot-, Ultraschall-oder Hochfrequenzsender. Als Programmquellen kommen beispielsweise eine Simultanübersetzungsanlage 62, ein Hörtrainer 63, eine Stereo-Anlage 64, ein Rundfunkempfänger 65, ein Kassettenrecorder 66 oder ein Fernsehgerät 67 in Frage.

Die Sendestation 60 kann gegebenenfalls durch einen Empfänger 68 zu einer Sende-Empfangsstation ergänzt werden, so daß eine Übertragung von Informationen in beiden Richtungen, das heißt von der Sende-Empfangsstation zu · einer Empfangsvorrichtung, zum Beispiel 110, und umgekehrt möglich ist. Dabei wird jedoch vorausgesetzt, daß die Empfangsvorrichtung wie in Fig. 2 angedeutet - durch eine Sendeschaltung 36 zu einer Sende-Empfangsstation ergänzt wird. In diesem Fall können dann an die Sende-Empfangsstation 69 auch eine Hör-Sprechanlage 70 und ein Sprachlabor 71 angeschlossen werden. Der Kassettenrecorder kann dann im Aufnahme-und Wiedergabebetrieb benutzt werden.

Ist die Empfangsvorrichtung, zum Beispiel 110 in Fig. 2, zu einer Sende-Empfangsvorrichtung ergänzt, so setzt das Mikrofon des mit der Sende-Empfangsvorrichtung verbundenen Hörgerätes das von dem Benutzer Gesprochene in elektrische Signale um, die der Sendeschaltung 36 der Sende-Empfangsvorrichtung 110 zugeführt werden.

**Ansprüche**

1. Empfangsvorrichtung für von einem Sender drahtlos ausgestrahlte Signale, dadurch gekennzeichnet, daß die als eine Baueinheit ausgebildete Empfangsvorrichtung (10) lösbar mit einem handelsüblichen elektronischen Hörgerät (12) verbunden ist.

2. Empfangsvorrichtung nach Anspruch 1, dadurch gekennzeichnet, daß die Empfangsvorrichtung (10) in einem Hörgerätegehäuse (13) untergebracht und über ein Kabel (11) mit dem Hörgerät (12) verbunden ist.

3. Empfangsvorrichtung nach Anspruch 1, dadurch gekennzeichnet, daß das Kabel (11) zumindest an seinem dem Hörgerät (12) zugewandten Ende mit einem Aufsteckadapter (22) versehen ist, der auf das Hörgerät aufsteckbar ist.

4. Empfangsvorrichtung nach Anspruch 1 oder 3, dadurch gekennzeichnet, daß die Empfangsvorrichtung (50) in einem Aufsteckadapter (52) enthalten ist.

5. Empfangsvorrichtung nach einem der Ansprüche 1 bis 4, dadurch gekennzeichnet, daß die drahtlose Übertragung der Signale mittels modulierter Infrarot-, Ultraschall-oder Hochfrequenz stattfindet.

6. Empfangsvorrichtung nach einem der Ansprüche 1 bis 5, dadurch gekennzeichnet, daß die Empfangsvorrichtung (110) durch eine Sendeschaltung (36) zu einer Sende-Empfangsvorrichtung ergänzt ist, die mit einer entsprechenden Sende-Empfangsstation (69) drahtlos verbunden ist.

0 279 914

# Fig. 1

# Fig. 2

# Fig. 3

0 279 914

# Fig. 4

51
57
56
52 50
53
54 55

# Fig. 5

60 69
61 S E 68

62 63 64 65 66 67 70 71